# EUROPEAN PATENT APPLICATION

(11) **EP 4 328 193 A1**
(43) Date of publication of application: **28.02.2024**
(21) Application number: 23806159.2
(22) Date of filing: 13.04.2023
(51) Int. Cl.: C02F 1/42, B01J 49/75, A47L 15/00

(54) **SALT CONTENT PROMPTING METHOD FOR SALT TANK IN WATER SOFTENING DEVICE**

(30) Priority: 30.05.2022 CN 202210605816
(71) Applicant: Foshan Midea Chungho Water Purification Equipment Co., Ltd., Foshan, Guangdong 528311 (CN); Midea Group Co., Ltd., Foshan, Guangdong 528311 (CN)
(72) Inventor: HU, Chenghuan, Foshan, Guangdong 528311 (CN); HAO, Zhipeng, Foshan, Guangdong 528311 (CN); QING, Pu, Foshan, Guangdong 528311 (CN); ZHANG, Bo, Foshan, Guangdong 528311 (CN); GONG, Ziming, Foshan, Guangdong 528311 (CN); HUANG, Rensheng, Foshan, Guangdong 528311 (CN); ZHENG, Yuedong, Foshan, Guangdong 528311 (CN); LIAO, Yumin, Foshan, Guangdong 528311 (CN)
(74) Representative: Whitlock, Holly Elizabeth Ann
(86) International application number: PCT/CN2023/088205
(87) International publication number: WO 2023/231610

(57) **Abstract**

A method for prompting salt content in a salt container of a water softening device, a salt container and a water softening device are provided. The method includes: obtaining a current salt content in a cavity of the salt container; and determining that the current salt content is lower than a preset salt content, and in accordance with a determination that the current salt content is lower than the preset salt content, adjusting brightness of a first light-emitting assembly facing the cavity.

## Description

### CROSS-REFERENCE TO RELATED APPLICATION

The present application claims priority to Chinese patent application No. 202210605816.1 filed on May 30, 2022, entitled "Method for Prompting Salt Content in Salt Container of Water Softening Device", which is hereby incorporated by reference in its entirety.

### FIELD

The present application pertains to the field of making soft water, in particular to a method for prompting salt content in a salt container of a water softening device.

### BACKGROUND

At present, in a procedure of making soft water using a water softening machine, softening resin is used to soften raw water to achieve a purpose of making soft water. In order to ensure the effect of making soft water, regeneration salt needs to be added into the water softening machine in time to restore the softening ability of the resin. The regeneration salt is generally stored in a salt container of the water softening machine. When the regeneration salt is needed in the procedure of making soft water, it is convenient and quick to obtain the regeneration salt directly from the salt container.

In order to enable users to know whether the salt container is short of salt and to prompt the users to add salt in time, in the related art, an alarm is set to prompt when the salt container is short of salt. However, the water softening machine is generally installed under a counter in kitchens or in dark places such as an equipment room, and the inside of the salt container is dark. When the alarm is prompted for salt shortage, even if the users open the salt container, the user cannot observe the remaining content of regeneration salt inside the salt container.

### SUMMARY

The present application aims to solve at least one of the problems in the related art. Therefore, the present application provides a method for prompting salt content in a salt container of a water softening device, which may not only prompt a shortage of regeneration salt in the salt container, but also facilitate a user to observe the remaining content of regeneration salt in the salt container.

The present application further provides an apparatus for prompting salt content in a salt container of a water softening device.

The present application further provides an electronic device.

The present application further provides a non-transient computer readable storage medium.

The present application further provides a salt container of a water softening device.

The present application further provides a water softening device.

A method for prompting salt content in a salt container of a water softening device according to an embodiment of the present application includes:
obtaining a current salt content in a cavity of the salt container; and
determining that the current salt content is lower than a preset salt content, and in accordance with a determination that the current salt content is lower than the preset salt content, adjusting brightness of a first light-emitting assembly facing the cavity.

According to the method for prompting salt content in the salt container of the water softening device provided by the embodiment of the present application, when the current salt content in the salt container is detected to be lower than the preset salt content, the brightness of the light-emitting assembly facing the cavity of the salt container is adjusted, then the light-emitting assembly may illuminate an inside of the salt container when the salt content is insufficient, and then the users may observe the inside of the salt container using a light of the light-emitting assembly when the users open the salt container. As such, a shortage of regeneration salt in the salt container may be prompted, and it may also facilitate a user to observe the remaining content of regeneration salt in the salt container.

According to an embodiment of the present application, obtaining the current salt content in the cavity of the salt container includes:
determining total salt consumption based on a total number of times of salt discharging from the cavity and salt consumption of each discharging; and
determining the current salt content based on a total salt content in the cavity and the total salt consumption.

According to an embodiment of the present application, obtaining the current salt content in the cavity of the salt container includes:
obtaining a current salt level height in the cavity; and
determining the current salt content based on the current salt level height.

According to an embodiment of the present application, determining the current salt content based on the current salt level height includes:
mapping the current salt level height with a data mapping table determined based on a shape and a volume of the cavity, and determining a target salt content corresponding to the current salt level height among preset salt contents recorded in the data mapping table as the current salt content;
where each of the preset salt contents corresponds to a salt level height.

According to an embodiment of the present application, obtaining the current salt content in the cavity of the salt container includes:
obtaining current water consumption of the water softening device; and
determining the current salt content based on the current water consumption.

According to an embodiment of the present application, in accordance with the determination that the current salt content is lower than the preset salt content, adjusting brightness of the first light-emitting assembly facing the cavity includes:
in accordance with the determination that the current salt content is lower than the preset salt content, detecting a cover body of the salt container; and
in accordance with a determination that the cover body is open, adjusting brightness of the first light-emitting assembly facing the cavity.

According to an embodiment of the present application, the method for prompting salt content in the salt container of the water softening device further includes:
determining that the current salt content is lower than the preset salt content, and turning off the water softening device.

An apparatus for prompting salt content in a salt container of a water softening device according to an embodiment of the present application includes:
a salt content obtaining module, configured to obtain a current salt content in a cavity of the salt container; and
a brightness adjustment module, configured to determine that the current salt content is lower than a preset salt content, and in accordance with a determination that the current salt content is lower than the preset salt content, adjusting brightness of a first light-emitting assembly facing the cavity.

An electronic device according to an embodiment of the present application includes:
a processor; and a memory storing a computer program that is executable by the processor, where the computer program, when executed by the processor, causes the electronic device to perform any one of the above mentioned methods for prompting salt content in the salt container of the water softening device.

A non-transient computer-readable storage medium according to an embodiment of the present application, having a computer program stored therein, where the computer program, when executed by a processor, causes the processor to perform any one of the above mentioned methods for prompting salt content in the salt container of the water softening device.

A salt container of a water softening device according to an embodiment of the present application includes:
a container body, including a cover body and a main body that, together with the cover body, defines a cavity body;
a first light-emitting assembly, where the first light-emitting assembly is arranged on the cover body or the main body, and a light-emitting portion of the first light-emitting assembly faces the cavity body; and
a controller, configured to perform any one of the above mentioned methods for prompting salt content in the salt container of the water softening device.

According to an embodiment of the present application, at least one of the main body and the cover body is pervious to light.

According to an embodiment of the present application, the salt container further includes:
a second light-emitting assembly, where the second light-emitting assembly is arranged on the cover body or the main body, and a light-emitting portion of the second light-emitting assembly faces the cavity body;
where the controller is further configured to determine that the cover body is open and adjust brightness of the second light-emitting assembly.

A water softening device according to an embodiment of the present application, includes any one of the above mentioned salt containers.

One or more of the above solutions in the embodiments according to the present application have at least one of the following effects.

When the current salt content in the salt container is detected to be lower than the preset salt content, the brightness of the light-emitting assembly facing the cavity of the salt container is adjusted, then the light-emitting assembly may illuminate an inside of the salt container when the salt content is insufficient, and then the users may observe the inside of the salt container using a light of the light-emitting assembly when the users open the salt container. As such, a shortage of regeneration salt in the salt container may be prompted, and it may also facilitate a user to observe the remaining content of regeneration salt in the salt container.

Further, the total salt consumption is determined by obtaining the total number of times of salt discharging and the salt consumption of each discharging. The current salt content is obtained based on the difference between the total salt consumption and the total salt content that may be accommodated in the cavity of the salt container, to make accuracy of obtained current salt content more accurate.

Further, by mapping the current salt level height with the data mapping table determined based on the volume of the cavity of the salt container, the current salt content corresponding to the current salt level height is obtained from the data mapping table, which reduces an affect of a shape of the cavity on the measurement results, makes the determined current salt content more in line with an actual situation, and improves the accuracy of the obtained current salt content.

Further, after it is determined that the current salt content is lower than the preset salt content, whether the cover body of the salt container is open is detected in advance; and when it is detected that the cover body of the salt container is open, it may be determined that the users need to and are able to observe the salt content of the regeneration salt. After that, the brightness of the first light-emitting assembly facing the cavity is adjusted, to avoid the adjustment for the first light-emitting assembly as an invalid adjustment and reduce consumption of the first light-emitting assembly.

### BRIEF DESCRIPTION OF THE DRAWINGS

In order to more clearly illustrate the solutions disclosed in the embodiments of the present application, the drawings used in the descriptions of the embodiments are briefly described below. The drawings in the following description are only of some embodiments of the present application, and other drawings may be obtained according to these drawings without any creative efforts for those skilled in the art.
FIG. 1 is a first schematic flowchart of a method for prompting salt content in a salt container of a water softening device according to an embodiment of the present application;
FIG. 2 is a second schematic flowchart of a method for prompting salt content in a salt container of a water softening device according to an embodiment of the present application;
FIG. 3 is a third schematic flowchart of a method for prompting salt content in a salt container of a water softening device according to an embodiment of the present application;
FIG. 4 is a structural schematic diagram of an apparatus for prompting salt content in a salt container of a water softening device according to an embodiment of the present application;
FIG. 5 is a structural schematic diagram of an electronic device according to an embodiment of the present application;
FIG. 6 is a structural schematic diagram of a salt container according to an embodiment of the present application;
FIG. 7 is a first partial structural schematic diagram of a salt container according to an embodiment of the present application;
FIG. 8 is a second partial structural schematic diagram of a salt container according to an embodiment of the present application; and
FIG. 9 is a structural schematic diagram of a water softening device according to an embodiment of the present application.

### DETAILED DESCRIPTION

To make the objectives, solutions, and advantages of the present application clearer, the following provides a clear and complete description for the solutions in the present application in conjunction with the accompanying drawings. It should be noted that the described embodiments are some of the embodiments of the present application, rather than all the embodiments. Based on the embodiments in the present application, all other embodiments obtained by those ordinarily skilled in the art without creative efforts fall within the scope of protection of the present application.

A method for prompting salt content in a salt container of a water softening device, a salt container and a water softening device according to the embodiments of the present application are introduced and explained in detail through several embodiments following.

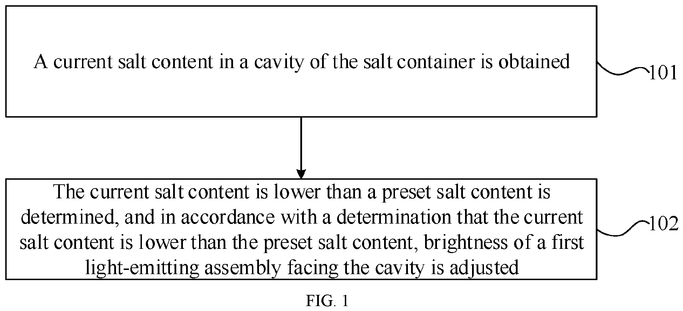

In an embodiment, a method for prompting salt content in a salt container of a water softening device is provided. The method is applied to a controller, such as a single chip microcomputer or a processor, to indicate the salt content in the salt container. As shown in FIG. 1, the method for prompting salt content in the salt container of the water softening device according to this embodiment includes the followings:
a current salt content in a cavity of the salt container is obtained; and
the current salt content is lower than a preset salt content is determined, and in accordance with a determination that the current salt content is lower than the preset salt content, brightness of a first light-emitting assembly facing the cavity is adjusted.

When the current salt content in the salt container is detected to be lower than the preset salt content, the brightness of the light-emitting assembly facing the cavity of the salt container is adjusted, to make the light-emitting assembly illuminate the inside of the salt container when the salt content is insufficient, and then the users may use a light of the light-emitting assembly to observe the inside of the salt container when the users open the salt container. As such, a shortage of regeneration salt in the salt container may be prompted, and it may also facilitate a user to observe the remaining content of regeneration salt in the salt container.

Considering that when the water softening device is turned off, there is no need to obtain regeneration salt from the salt container for resin regeneration treatment. In this case, even if the regeneration salt is insufficient, the users may not have a need to add the regeneration salt. Thus, a detection for the regeneration salt may become useless due to low attention of the users, which may cause the controller or the first light-emitting assembly to be consumed for no reason, and waste of power resource. Therefore, in an embodiment, the controller may detect whether the water softening device is turned on in advance. If the water softening device is turned on, the current salt content in the cavity of the salt container may be obtained. A current detection unit configured to detect the current may be set in the controller to detect whether the water softening device is turned on. The current detection unit may be a current sensor and may be connected to a switch for detecting the water softening device, and then it may be determined whether the water softening device is turned on by detecting the current of the switch.

In an embodiment, the controller may be provided with a sensor configured to detect a current content of the regeneration salt in the cavity. Through a detection result for the salt content of the regeneration salt by the sensor, the current salt content in the salt container is obtained. For example, the sensor may be a gravity sensor, which may be set at the bottom of the cavity to detect a weight of the regeneration salt in the cavity, and then the gravity sensor transmits a detected weight of the regeneration salt to the controller, and then the controller determines the current salt content based on the current weight of the regeneration salt. A unit of the current salt content may be weight or volume. For example, if the weight of the regeneration salt is 70 g detected by the gravity sensor, the current salt content of the regeneration salt is 70g; or, after the weight of the regeneration salt is detected to be 70 g, a volume of the current salt content may be determined based on a density of the regeneration salt.

Considering that an area at the bottom of the cavity may be large, some areas may not be covered with the regeneration salt. If the gravity sensor is configured to obtain the current salt content, it may cause the regeneration salt to not cover the area where the gravity sensor is located, thereby mistakenly triggering the first light-emitting assembly. In addition, since the volume of the salt container of the water softening device is generally not very large, the weight of the regeneration salt that the salt container may hold is also small. It may occur that the weight of the regeneration salt in the salt container is not enough to trigger an energy storage spring of the gravity sensor, resulting in the obtained current salt content of the regeneration salt is not accurate. Therefore, in order to obtain the current salt content more accurately, in an embodiment, the current salt content in the cavity of the salt container is obtained by:
determining total salt consumption based on a total number of times of salt discharging from the cavity and salt consumption of each discharging; and
determining the current salt content based on a total salt content in the cavity and the total salt consumption.

In an embodiment, when water consumption of the water softening device reaches or is about to reach a maximum volume of soft water in a cycle of the water softening device, the resin is needed to be regenerated. Then, it is necessary to obtain regeneration salt from the salt container. Therefore, the controller may detect a number of times of resin regeneration of the water softening device through a counter, and determine the number of times of resin regeneration of the water softening device as the total number of times of salt discharging from the cavity of the salt container. The counter is cleared and recounted when the regeneration salt is re-added into the salt container to further improve accuracy of obtained current salt content.

In an embodiment, the salt consumption of each discharging may be preset according to an actual situation. For example, through a large number of resin regeneration experiments, the salt consumption of each regeneration experiment is obtained, and then the salt consumption of each regeneration experiment is averaged to determine the salt consumption of each discharging. Then, the total salt consumption may be obtained by multiplying the salt consumption of each discharging by the total number of times of salt discharging.

Considering that an error of salt consumption determined according to the average number may be large, the obtained total salt consumption may not be accurate enough, which affects determination of the current salt content. Therefore, for the salt consumption, it may also be determined based on a regeneration duration and water consumption during the regeneration of the resin. In an embodiment, a large number of resin regeneration experiments may be carried out in advance to determine an effect of regeneration duration and water consumption on salt consumption, to form a data mapping relationship table. The data mapping table records a relationship between a data set composed of regeneration duration and water consumption and corresponding salt consumption. If the regeneration duration is 1 minute, the water consumption is 100 ml, and the weight or volume of the corresponding salt consumption is 100 g or 10 ml. Through a large number of resin regeneration experiments, the corresponding relationship between each data set and each salt consumption may be determined, and a data mapping table may be formed. After the data mapping relationship table is formed, matched salt consumption is determined by comparing the regeneration duration and water consumption of a certain resin regeneration with the salt consumption in the data mapping relationship table, and the matched salt consumption is determined as the salt consumption of the salt discharging. After the salt consumption of each time is determined, based on the total number of times of salt discharging, the salt consumption of each time is accumulated to obtain the total salt consumption.

After the total salt consumption is obtained, the total salt consumption is subtracted from the total salt content in the salt container to determine the current salt content. The total salt content in the salt container is the content of salt in the cavity when the counter is cleared, that is, the content of salt in the salt container after re-adding the regeneration salt. Since the water softening device is generally set to fill up with the regeneration salt when adding the regeneration salt, the total salt content may be preset directly according to the maximum volume of the salt container, such as 100 g or 100 ml.

The total salt consumption is determined by obtaining the total number of times of salt discharging and the salt consumption of each discharging, and the current salt content is obtained based on a difference between the total salt consumption and total salt content in the cavity of the salt container, which improves accuracy of the obtained current salt content.

In addition to obtaining the current salt content by determining the total salt consumption, in an embodiment, the current salt content may also be determined by obtaining a current salt level height in the cavity.

The current salt level height may be obtained by a distance sensor. The distance sensor may be installed on a side of the cover body of the salt container facing the cavity. A transmitting end of the distance sensor faces the bottom of the cavity to transmit signals, and a receiving end is configured to receive signals. Then, a distance between the distance sensor and an obstacle, such as the salt surface of the regeneration salt, is calculated based on a time difference between the transmitted signal and the received signal and the signal transmission speed. The current salt level height is determined based on a received distance between the distance sensor and the salt surface transmitted from the distance sensor. Since the cavity is generally a regular shape such as a cuboid, a cylinder or a truncated cone, a bottom area of the cavity is determined, and the current salt content may be accurately determined.

For example, when the distance sensor is installed, the distance between the distance sensor and the bottom of the cavity, namely the height H of the cavity, may be measured in advance. After the controller obtains the distance hi of the salt surface through the distance sensor, based on the distance hi and the height H of the cavity, the current salt level height of the salt surface h₂=H-h₁ is obtained. Therefore, based on a determined volume V₁ of the cavity, the height H of the cavity, and the current salt level height h₂, the volume V₂ of the current salt content of the regeneration salt may be determined, and the weight of the current salt content is V₂×ρ, where ρ refers to the density of the regeneration salt.

Considering that the cavity may be irregular in shape, an error of the current salt content determined based on the volume V₁ of the cavity, the height H of the cavity, and the current salt level height h₂ may be large. Therefore, in an embodiment, the current salt content is determined based on the current salt level height and the volume of the cavity by:
mapping the current salt level height with a data mapping table determined based on a shape and a volume of the cavity, and determining a target salt content corresponding to the current salt level height among preset salt contents recorded in the data mapping table as the current salt content;
where each of the preset salt contents corresponds to a salt level height.

In an embodiment, a corresponding relationship between different salt level heights and different preset salt contents may be preset based on a volume of a cavity with a specific shape, and the corresponding relationship may be recorded in the data mapping table. Based on the volume of the cavity with the specific shape, the corresponding relationship between different salt level heights and different preset salt contents may be determined in advance through a large number of experiments, thus forming the data mapping table. For example, the cavity is presented as an irregular "L" shape with a volume of 1000 ml. Then, the salt level heights corresponding to the salt content of 10 ml, 20 ml, and 30 ml in the cavity may be tested separately, and then these data are recorded in a data mapping table to form a data mapping table corresponding to the volume and shape of the cavity.

After the current salt level height is obtained, by mapping the current salt level height with the salt level heights in the data mapping relationship table, a salt level height that is the same as the current salt level height or a salt level height having the smallest difference with the current salt level height is selected from the salt level heights in the data mapping relationship table, and then the preset salt content in the data mapping record table corresponds the selected salt level height is determined as the current salt content. If multiple salt level heights having the smallest difference with the current salt level height exist, a salt level height is randomly selected.

By mapping the current salt level height with the data mapping table determined based on the volume of the cavity of the salt container, the current salt content corresponding to the current salt level height is obtained from the data mapping table, thereby reducing the influence of the shape of the cavity on the measurement results, making the determined current salt content more in line with the actual situation, and improving the accuracy of the obtained current salt content.

In addition to determining the current salt content based on the current salt level height, in an embodiment, the controller may determine the current salt content according to an obtained current water consumption of the water softening device. The current water consumption may be obtained by setting a water flow detector on an inlet side of the water softening device. When the resin is regenerated, the raw water enters the salt container through the inlet side of the water softening device, dissolve the regeneration salt to form a salt solution, and then enters the resin container. As such, the current water consumption in the resin regeneration process may be detected by the water flow detector. After obtaining the current water consumption, the current water consumption is mapped with the data table that records a corresponding relationship between the water consumption and the current salt content to determine the current salt content corresponding to the water consumption. The data table of the corresponding relationship between the water consumption and the current salt content may be determined according to the experimental data. For example, if 70% of the maximum water consumption is detected, the current salt content may be set to 30% of the total salt content of the salt container.

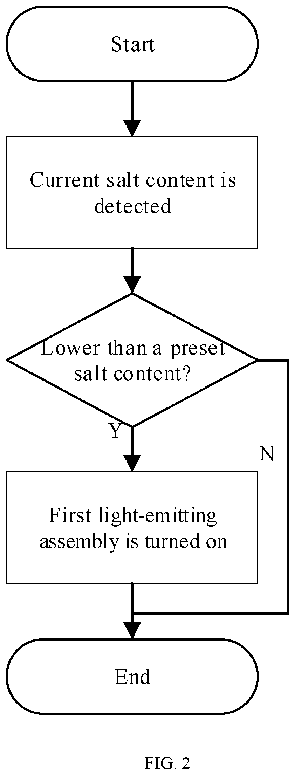

As shown in FIG. 2, after the current salt content in the cavity of the salt container is obtained, whether the current salt content is lower than the preset salt content is detected. If the current salt content is higher than or equal to the preset salt content, the first light-emitting assembly facing the cavity is controlled to turn off; and if the current salt content is lower than the preset salt content, the first light-emitting assembly facing the cavity is turned on, to make the users observe the remaining salt content in the cavity. The preset salt content may be set based on the actual situation. For example, the preset salt content may be 30% of the salt content that the salt container may accommodate. If the current salt content is lower than 30% of the salt content that the salt container may accommodate, the first light-emitting assembly facing the cavity is controlled to turn on, otherwise, the first light-emitting assembly is turned off.

In an embodiment, the first light-emitting assembly may be a light-emitting assembly having multi-level adjustable light-emitting intensity. If the controller detects that the current salt content is higher than or equal to the preset salt content, the light-emitting assembly may be controlled to operate at a first light-emitting intensity. Otherwise, the first light-emitting assembly is controlled to operate at a second light-emitting intensity. The second light-emitting intensity is greater than the first luminescence intensity.

In an embodiment, the first light-emitting assembly may be a light-emitting assembly that may emit multiple colors of light. For example, it may be composed of a first light-emitting unit emitting red light and a second light-emitting unit emitting white light. When the current salt content is detected to be higher than or equal to the preset salt content, the light-emitting assembly may be controlled to turn on the first light-emitting unit. If the current salt content is detected to be lower than the preset salt content, the light-emitting assembly is controlled to turn on the second light-emitting unit to illuminate the inside of the salt container.

The first light-emitting assembly consists of one or more components with lighting functions, such as LED lamps or halogen lamps.

It should be noted that the current salt content may be determined based on the current water consumption, and the current water consumption is proportional to the salt consumption of the salt container. If the current water consumption is 70% of the maximum water consumption, the salt consumption is 70% of the total salt content of the salt container, and the current salt content is 30% of the total salt content of the salt container. Therefore, the brightness of the first light-emitting assembly may also be adjusted directly based on the current water consumption, that is, when the current water consumption is determined to be greater than the preset water consumption, the brightness of the first light-emitting assembly may be adjusted. For example, when the current water consumption is detected to be greater than the preset water consumption, for example, it is greater than 70 % of the maximum water consumption, the first light-emitting assembly is turned on.

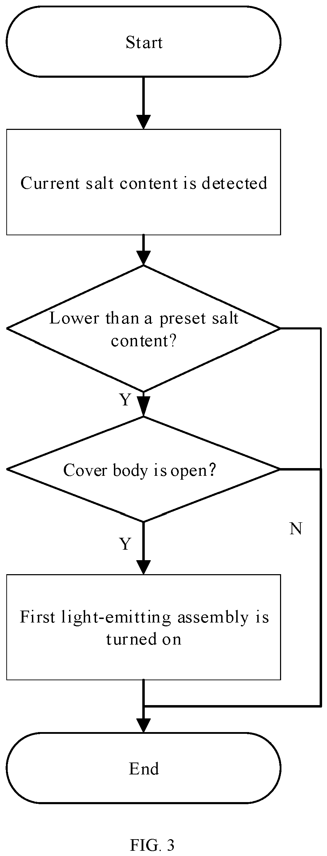

Considering that the water softening device is generally installed under a counter in the kitchens, or the salt container may be made of opaque materials, when adjusting the brightness of the first light-emitting assembly, the users may unable to effectively observe the salt content of the regeneration salt, or the users do not have a demand for observing the regeneration salt at this time, resulting in ineffective adjustment for the first light-emitting assembly, increasing a consumption of the first light-emitting assembly. In an embodiment, as shown in FIG. 3, the controller may detect in advance whether the cover body of the salt container is opened after determining that the current salt content is lower than the preset salt content; and when the cover body of the salt container is detected to be open, it may be determined that the users need to observe the content of the regeneration salt. Then, the brightness of the first light-emitting assembly facing the cavity is adjusted, to avoid the adjustment of the first light-emitting assembly as useless adjustment and reduce the consumption of the first light-emitting assembly.

The controller determines whether the cover body of the salt container is opened, which may be determined by whether it receives a prompt signal transmitted from a sensing component. The prompt signal is used to prompt that the cover body of the salt container is open. If a prompt signal transmitted from an external device is received, the controller determines that the cover body of the salt container is open. For example, the sensing component may be an infrared sensor, a Hall sensor or a photoelectric sensor arranged on the salt container.

In addition to adjusting the brightness of the first light-emitting assembly, in order to avoid a poor resin regeneration effect due to insufficient salt content, in an embodiment, when the current salt content is determined to be lower than the preset salt content, the water softening device may also turn off to stop resin regeneration treatment and stop making soft water.

An apparatus for prompting salt content in a salt container of a water softening device according to the present application is described below. The apparatus for prompting salt content in the salt container of the water softening device described below and the method for prompting salt content in the salt container of the water softening device described above may refer to each other.

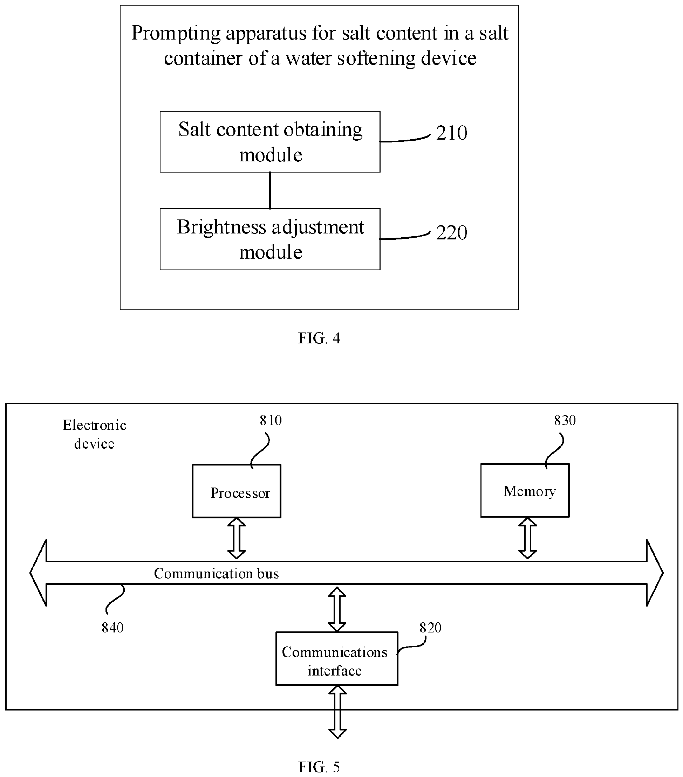

In an embodiment, as shown in FIG. 4, the apparatus for prompting salt content in the salt container of the water softening device includes:
a salt content obtaining module 210, configured to obtain a current salt content in a cavity of the salt container; and
a brightness adjustment module 220, configured to determine that the current salt content is lower than a preset salt content, and in accordance with a determination that the current salt content is lower than the preset salt content, adjusting brightness of a first light-emitting assembly facing the cavity.

A total salt consumption is determined by obtaining a total number of times of salt discharging and the salt consumption at each discharging. Based on the difference between the total salt consumption and a total salt content that the cavity of the salt container may accommodate, the current salt content is obtained, so that accuracy of an obtained current salt content is more accurate.

In an embodiment, the salt content obtaining module 210 is configured to:
determine total salt consumption based on a total number of times of salt discharging from the cavity and salt consumption of each discharging; and
determine the current salt content based on a total salt content in the cavity and the total salt consumption.

In an embodiment, the salt content obtaining module 210 is configured to:
obtain a current salt level height in the cavity; and
determine the current salt content based on the current salt level height.

In an embodiment, the salt content obtaining module 210 is configured to:
map the current salt level height with a data mapping table determined based on a shape and a volume of the cavity, and determine a target salt content corresponding to the current salt level height among preset salt contents recorded in the data mapping table as the current salt content;
where each of the preset salt contents corresponds to a salt level height.

In an embodiment, the salt content obtaining module 210 is configured to:
obtain current water consumption of the water softening device; and
determine the current salt content based on the current water consumption.

In an embodiment, the brightness adjustment module 220 is configured to:
in accordance with the determination that the current salt content is lower than the preset salt content, detect a cover body of the salt container; and
in accordance with a determination that the cover body is open, adjust brightness of the first light-emitting assembly facing the cavity.

In an embodiment, the brightness adjustment module 220 is further configured to:
determine that the current salt content is lower than the preset salt content, and turn off the water softening device.

FIG. 5 is a structural schematic diagram of an electronic device. As shown in FIG. 5, the electronic device may include: a processor 810, a communications interface 820, a memory 830, and a communication bus 840, where the processor 810, the communication interface 820, and the memory 830 communicate with each other through the communication bus 840. The processor 810 may invoke logical instructions stored in the memory 830 to execute the method for prompting salt content in a salt container of a water softening device, the method includes:
obtaining a current salt content in a cavity of the salt container; and
determining that the current salt content is lower than a preset salt content, and in accordance with a determination that the current salt content is lower than the preset salt content, adjusting brightness of a first light-emitting assembly facing the cavity.

In addition, the logical instructions stored in the memory 830 mentioned above may be implemented in a form of software functional unit and stored in a computer-readable storage medium when sold or used as independent products. Based on such understanding, the solution of the present application, in essence, or the portion that contributes to the related art or the portion of the solution, may be reflected in a form of a software product, and the software product is stored in a storage medium, the storage medium storing several instructions to enable a computer device (which may be a personal computer, server, or network device, etc.) to perform all or part of the steps of the methods described in various embodiments of the present application. The aforementioned storage media include various media that may store program codes, such as USB flash drives, removable hard drives, read only memory (ROM), random access memory (RAM), magnetic disks, or optical discs, etc.

On the other hand, the present application further provides a storage medium including a computer program, and the computer program may be stored in a non-transient computer-readable storage medium. The computer program, when executed by a processor, causes the processor to perform the method for prompting salt content in a salt container of a water softening device described in the above embodiments, for example, the method includes:
obtaining a current salt content in a cavity of the salt container; and
determining that the current salt content is lower than a preset salt content, and in accordance with a determination that the current salt content is lower than the preset salt content, adjusting brightness of a first light-emitting assembly facing the cavity.

On the other hand, the present application further provides a non-transient computer-readable storage medium storing a computer program. The computer program, when executed by a processor, causes the processor to perform the method for prompting salt content in a salt container of a water softening device, for example, the method includes:
obtaining a current salt content in a cavity of the salt container; and
determining that the current salt content is lower than a preset salt content, and in accordance with a determination that the current salt content is lower than the preset salt content, adjusting brightness of a first light-emitting assembly facing the cavity.

A processor readable storage media may be any available media or data storage device that the processor may access, including but not limited to magnetic memory (such as floppy disk, hard disk, tape, magneto-optical disk (MO), etc.), optical memory (such as CD, DVD, BD, HVD, etc.), semiconductor memory (such as ROM, EPROM, EEPROM, non-volatile memory (NAND FLASH), solid-state hard disk (SSD)), etc.

The salt container according to the present application is described below in combination with the drawings.

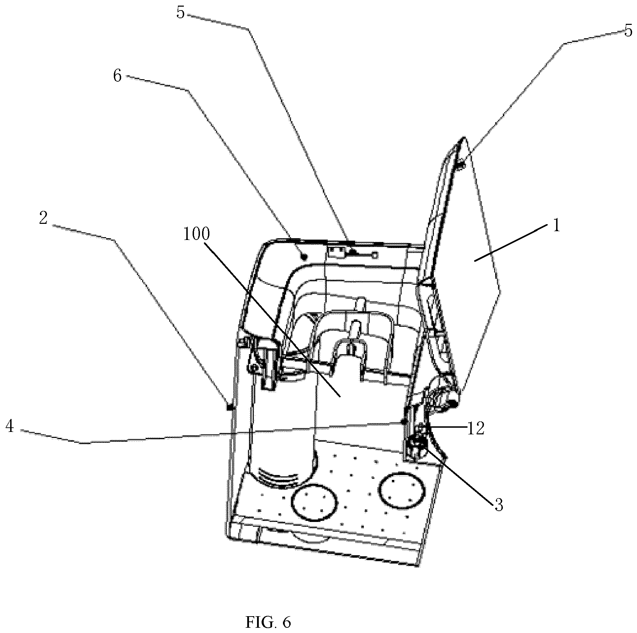

As shown in FIG. 6, which is a structural schematic diagram of a salt container according to an embodiment of the present application. The salt container includes:
a container body, including a cover body 1 and a main body 2 that, together with the cover body 1, defines a cavity body 100;
a first light-emitting assembly 3, where the first light-emitting assembly 3 is arranged on the cover body 1 or the main body 2, and a light-emitting portion of the first light-emitting assembly 3 faces the cavity body 100; and
a controller, configured to perform the method for prompting salt content in a salt container of a water softening device according to any embodiment mentioned above.

For example, the main body 2 is provided with an outer frame 4, and the first light-emitting assembly 3 may be installed on the outer frame 4 by means of snap-fit, welding and other fixed means. The light-emitting portion is connected with the cavity through a through hole on the outer frame 4. In addition to installing the first light-emitting assembly 3 on the outer frame 4, the first light-emitting assembly 3 may also be fixed on the side of the cover body 1 facing the cavity, or inside the main body 2.

In an embodiment, the salt container may also be provided with a distance sensor 12. A transmitting end of the distance sensor 12 is facing the bottom of the cavity, which is configured to transmit signals, and the receiving end is configured to receive signals. The distance between the distance sensor 12 and the obstacle, such as a salt surface of regeneration salt, is calculated by the time difference between the transmitted signal and the received signal and the signal transmission speed. For example, the distance sensor 12 may be fixed on the outer frame 4 of the main body 2 by means of snap-fit and welding, or arranged on the side of the cover body facing the cavity.

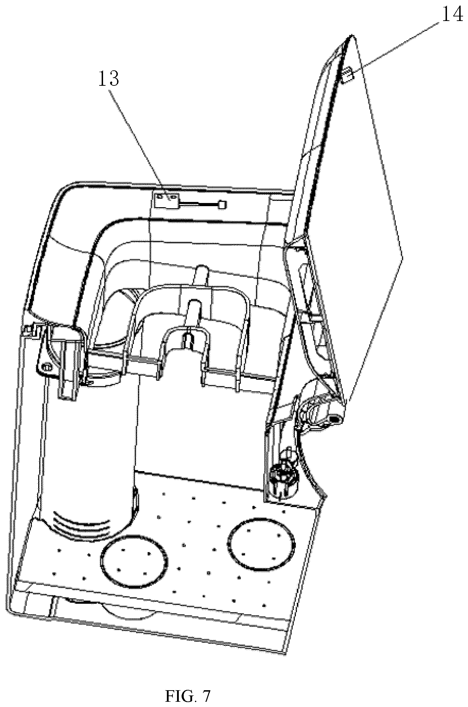

In an embodiment, the salt container may also be provided with a sensing component 5 for detecting opening and closing of the cover body 1. The sensing component 5 may be arranged on the cover body 1 and/or main body 2, which may be an infrared sensor, a Hall sensor or a photoelectric sensor, a gravity sensor, etc. As an example, as shown in FIG. 7, the sensing component include a reed tube 13 arranged on a middle frame 6 of the main body 2, and a magnet 14 arranged on the side of the cover body 1 facing the cavity 100. The reed tube 13 is connected to the controller, and the magnet 14 corresponds to the position of the reed tube 13 when the cover body 1 is in a closed state. When the cover body 1 is opened, the magnet 14 moves with the cover body and away from the reed tube 13. Then, the reed tube 13 is disconnected, and the magnetic induction signal received by the controller disappears, so as to determine that the cover body 1 is opened and perform a corresponding operation. When the cover body 1 is closed, the magnet 14 moves with the cover body to the position corresponding to the reed tube 13, and then generates a magnetic induction signal and the magnetic induction signal is transmitted to the controller, prompting that the cover body is closed, so that the controller may perform the corresponding control operation according to the magnetic induction signal.

It should be noted that the positions of the reed tube 13 and the magnet 14 may be interchanged, that is, the magnet 14 is arranged on the middle frame 6 of the main body 2, and the reed tube 13 is arranged on a side of the cover body 1 facing the cavity 100.

As an example, the reed tube 13 may be replaced with a Hall sensor. When the cover body 1 is opened, the magnet 14 moves with the cover body and gets far away from the Hall sensor. Then, the controller cannot receive the magnetic induction signal, to determine that the cover body 1 is opened and perform the corresponding control operation. When the cover body 1 is closed, the magnet 14 moves with the cover body to the position corresponding to the Hall sensor, so that a magnetron switch formed by the cover body and the magnet is closed, and a magnetic induction signal is generated and transmitted to the controller to prompt that the cover body is closed, to make the controller perform the corresponding control operation according to the magnetic induction signal.

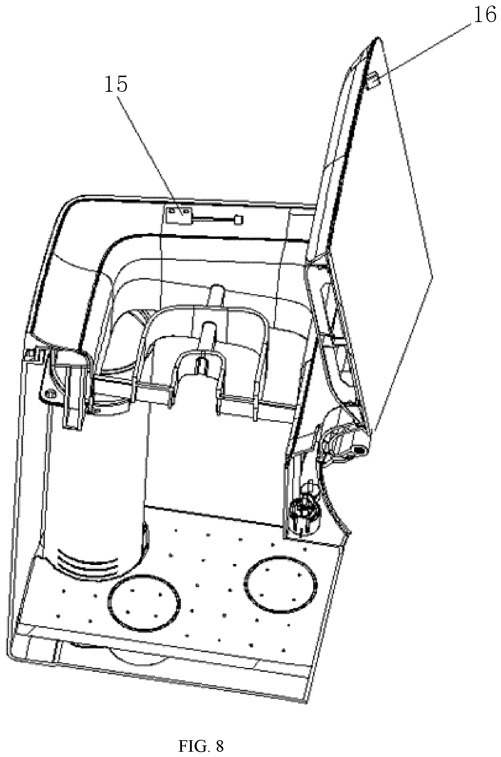

As an example, as shown in FIG. 8, the sensing component includes a photoelectric sensor 15 arranged on the middle frame 6 of the body 2, and the photoelectric sensor 15 is connected to the controller. When the cover body 1 is in a closed state, a light barrier 16 arranged on the cover body 1 is located between a transmitting end and a receiving end of the photoelectric sensor 15, and the light source of the photoelectric sensor 15 is separated. Thus, the light source signal of the photoelectric sensor 15 is disconnected by the light barrier 16. After the light source signal of the photoelectric sensor 15 is disconnected, a prompt signal is transmitted to the controller, to make the controller perform the corresponding control operation according to the prompt signal. When the cover body 1 is opened, the light barrier 16 is far away from the photoelectric sensor 15. As such, the light barrier 16 cannot block the light source of the photoelectric sensor 15, and the light source is kept unobstructed. The light source signal is generated and transmitted to the controller, to make the controller perform the corresponding control operation according to the light source signal.

It should be noted that the position of the photoelectric sensor 15 and the light barrier 16 may be interchanged, that is, the light barrier 16 is arranged on the middle frame 6 of the main body 2, and the photoelectric sensor 15 is arranged on a side of the cover body 1 facing the cavity 100.

For example, the sensing component may be a gravity sensor arranged on the middle frame 6 of the main body 2, and the gravity sensor is connected to the controller. When the cover body 1 is in a closed state, the cover body 1 contacts with the gravity sensor on the side facing the cavity 100, triggers an energy storage spring of the gravity sensor to store energy, and generates an electrical contact signal to transmit to the controller, prompting that the cover body 1 is closed, to make the controller perform the corresponding operation according to the electrical contact signal. When the cover body 1 is in the open state, the side of the cover body 1 facing the cavity 100 is away from the gravity sensor, the electric contact signal received by the controller disappears, and the corresponding control operation is performed.

In an embodiment, at least one of the cover body 1 and the main body 2 is translucent. For example, the cover body 1 may be made of translucent or transparent material to facilitate salt observation. Similarly, the main body 2 may also be made of translucent or transparent materials.

In an embodiment, the salt container may also include a second light-emitting assembly, the second light-emitting assembly is arranged on the cover body 1 or the main body 2, and a light-emitting portion of the second light-emitting assembly is facing the cavity 100. For example, the second light-emitting assembly is fixed on the outer frame 4 by means of snap-fit, welding, etc., and the light-emitting portion of the second light-emitting assembly is connected to the cavity through a through hole on the outer frame 4. In addition to installing the second light-emitting assembly on the outer frame 4, the second light-emitting assembly may also be fixed on the side of the cover body 1 facing the cavity, or inside the main body 2.

The second light-emitting assembly may be composed of one or more components with lighting functions, such as LED lights or halogen lights. The second light-emitting assembly may be a light-emitting assembly having multi-level adjustable light-emitting intensity, or a light-emitting assembly that is able to emit multiple colors of light. For a convenience of observation, the visible light color emitted by second light-emitting assembly is different from that of the first light-emitting assembly.

In an embodiment, the controller is also configured to determine the cover body 1 is opened and adjust the brightness of the second light-emitting assembly. For example, when the cover body 1 is closed, the controller closes the second light-emitting assembly; and when the controller determines that the cover body 1 is open, the second light-emitting assembly is turned on, to make the user observe the remaining content of regeneration salt inside the salt container. It should be noted that when the brightness of the first light-emitting assembly is not adjusted, and the brightness of the second light-emitting assembly is adjusted, for example, the first light-emitting assembly is turned on, and the second light-emitting assembly is turned off, the user may be prompted that the content of regeneration salt is sufficient, and it is convenient for the user to observe the content of regeneration salt. When both the brightness of the first light-emitting assembly and the brightness of the second light-emitting assembly are adjusted, for example, both the first light-emitting assembly and the second light-emitting assembly are turned on, it is more convenient for the user to observe the remaining content of regeneration salt while prompting the user that the remaining content of regeneration salt is insufficient.

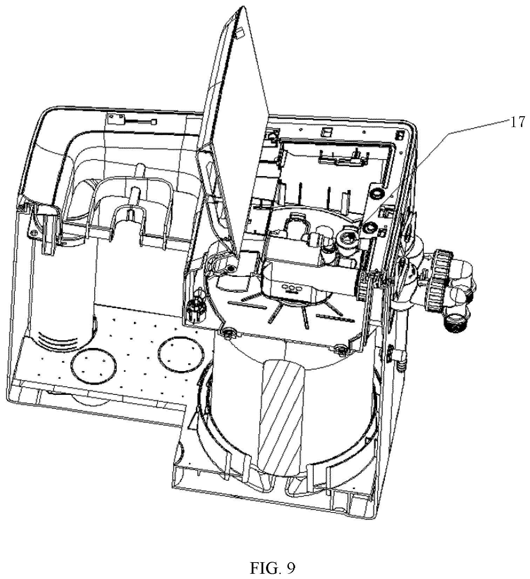

As shown in FIG. 9, which is a structural schematic diagram of a water softening device according to an embodiment of the present application. The water softening device includes a salt container of any embodiment mentioned above.

In an embodiment, as shown in FIG. 9, the water softening device also includes a water flow detector 17 arranged on an inlet side. The water flow detector 17 is connected to the controller to detect the water consumption of the water softening device, and the result of the detected water consumption is transmitted to the controller to enable the controller to perform the corresponding operation based on the water consumption.

The apparatus embodiments described above are only schematic, where the units described as separate parts may be or may not be physically separated, and the parts displayed as units may be or may not be physical units, that is, they may be located in one place or distributed across a plurality of network units. Some or all modules may be selected according to actual needs to achieve objectives of the solution of the present embodiment. Those with ordinary skill in the art may understand and implement without creative effort.

Through the description of the above embodiments, those skilled in the art may clearly understand that each embodiment may be achieved through software and necessary universal hardware platforms, and of course, the embodiment may also be achieved through hardware. Based on such understanding, the solutions mentioned above, or the parts that contribute to the related art may be reflected in a form of software product, the software product may be stored in computer-readable storage media such as ROM/RAM, magnetic disks, optical disks, etc. The storage medium includes several instructions to enable a computer device (which may be a personal computer, server, or network device, etc..) to execute the methods described in various embodiments or certain parts of the embodiments.

It should be noted that, the aforementioned embodiments are only used to illustrate the solution of the present application, not to limit it; although the present application is described in detail with reference to the aforementioned embodiments, those ordinarily skilled in the art should understand that they may still modify the solutions recorded in the aforementioned embodiments, or equivalently replace some of the technical features; and these modifications or replacements do not separate the essence of the corresponding solutions from the scope of the solutions of the various embodiments of the present application.

## Claims

1. A method for prompting salt content in a salt container of a water softening device, comprising:
obtaining a current salt content in a cavity of the salt container; and
determining that the current salt content is lower than a preset salt content, and in accordance with a determination that the current salt content is lower than the preset salt content, adjusting brightness of a first light-emitting assembly facing the cavity.

2. The method of claim 1, wherein obtaining the current salt content in the cavity of the salt container comprises:
determining total salt consumption based on a total number of times of salt discharging from the cavity and salt consumption of each discharging; and
determining the current salt content based on a total salt content in the cavity and the total salt consumption.

3. The method of claim 1 or claim 2, wherein obtaining the current salt content in the cavity of the salt container comprises:
obtaining a current salt level height in the cavity; and
determining the current salt content based on the current salt level height.

4. The method of claim 3, wherein determining the current salt content based on the current salt level height comprises:
mapping the current salt level height with a data mapping table determined based on a shape and a volume of the cavity, and determining a target salt content corresponding to the current salt level height among preset salt contents recorded in the data mapping table as the current salt content;
wherein each of the preset salt contents corresponds to a salt level height.

5. The method of any one of claims 1 to 4, wherein obtaining the current salt content in the cavity of the salt container comprises:
obtaining current water consumption of the water softening device; and
determining the current salt content based on the current water consumption.

6. The method of any one of claims 1 to 5, wherein in accordance with the determination that the current salt content is lower than the preset salt content, adjusting brightness of the first light-emitting assembly facing the cavity comprises:
in accordance with the determination that the current salt content is lower than the preset salt content, detecting a cover body of the salt container; and
in accordance with a determination that the cover body is open, adjusting brightness of the first light-emitting assembly facing the cavity.

7. The method of any one of claims 1 to 6, further comprising:
determining that the current salt content is lower than the preset salt content, and turning off the water softening device.

8. An apparatus for prompting salt content in a salt container of a water softening device, comprising:
a salt content obtaining module configured to obtain a current salt content in a cavity of the salt container; and
a brightness adjustment module, configured to determine that the current salt content is lower than a preset salt content, and in accordance with a determination that the current salt content is lower than the preset salt content, adjusting brightness of a first light-emitting assembly facing the cavity.

9. An electronic device, comprising: a processor; and a memory storing a computer program that is executable by the processor, wherein the computer program, when executed by the processor, causes the electronic device to perform the method for prompting salt content in a salt container of a water softening device of any one of claims 1 to 7.

10. A non-transient computer-readable storage medium storing a computer program, wherein the computer program, when executed by a processor, causes the processor to perform the method for prompting salt content in a salt container of a water softening device of any one of claims 1 to 7.

11. A salt container of a water softening device, comprising:
a container body, comprising a cover body and a main body that, together with the cover body, defines a cavity body;
a first light-emitting assembly, wherein the first light-emitting assembly is arranged on the cover body or the main body, and a light-emitting portion of the first light-emitting assembly faces the cavity body; and
a controller, configured to perform the method for prompting salt content in a salt container of a water softening device of any one of claims 1 to 7.

12. The salt container of claim 11, wherein at least one of the main body and the cover body is pervious to light.

13. The salt container of claim 11 or claim 12, further comprising:
a second light-emitting assembly, wherein the second light-emitting assembly is arranged on the cover body or the main body, and a light-emitting portion of the second light-emitting assembly faces the cavity body;
wherein the controller is further configured to determine that the cover body is open and adjust brightness of the second light-emitting assembly.

14. A water softening device, comprising the salt container of any one of claims 11 to 13.
